# EUROPÄISCHE PATENTSCHRIFT

(11) **EP 0 892 179 B1**
(45) Veröffentlichungstag und Bekanntmachung des Hinweises auf die Patenterteilung: **24.03.2004**
(21) Anmeldenummer: 98810053.3
(22) Anmeldetag: 28.01.1998
(51) Int. Cl.: F16B 5/06, F16B 19/00, F16B 21/07

(54) **Halteeinrichtung für zumindest einen flächenhaften Gegenstand**
Fastening device for at least one flat shaped element
Dispositif de fixation pour au moins un élément plan

(30) Priorität: 15.07.1997 CH 173297
(43) Veröffentlichungstag der Anmeldung: 20.01.1999
(73) Patentinhaber: Schläpfer Consulting, 9413 Oberegg (CH)
(72) Erfinder: Schläpfer, Roman, CH-9413 Oberegg (CH)
(74) Vertreter: Kulhavy, Sava V.

(56) Entgegenhaltungen:
- FR-A- 2 095 439
- FR-A- 2 670 714
- GB-A- 2 133 828
- JP-A- 11 042 879
- US-A- 5 294 226

## Beschreibung

Die vorliegende Erfindung betrifft eine Halteeinrichtung für zumindest einen flächenhaften Gegenstand gemäss dem einleitenden Teil des Patentspruchs 1.

Eine Einrichtung dieser Gattung ist aus GR-A 960100434 bekannt. Sie umfasst einen Rücken, welcher einen U-förmigen Querschnitt aufweist Die Schenkel dieser U-Form stellen Lappen dar, zwischen welchen eine der Randpartien eines Stapels aus flächenhaften Gegenständen, beispielsweise aus Stoffmustern, liegt. Diese vorbekannte Einrichtung umfasst ferner Steckvorrichtungen, welche die flächenhaften Gegenstände zwischen den Lappen halten. Die jeweilige Steckvorrichtung besteht aus zwei Komponenten, wobei jeweils eine dieser Komponenten an einem der Lappen des U-Rückens befestigt ist. Damit die Komponente am Lappen befestigt sein kann, weist sie zwei Teile auf. Der erste Teil wird einer der Seiten des Lappens zugeordnet. Der zweite Teil wird der anderen Seite des Lappens zugeordnet. Einer von diesen Teilen geht durch eine im Lappen vorbereitete Öffnung hindurch und wird mit dem anderen Teil in einer bekannten Weise verbunden, sodass der Lappen zwischen diesen Teilen geklemmt ist.

Das Zusammenführen der zwei an sich kleinen Teile der jeweiligen Einrichtungskomponenten ist eine verhältnismässig mühsame, mitunter auch zeitraubende und daher verhältnismässig teuere Angelegenheit.

Die Aufgabe der vorliegenden Erfindung ist, diesen Nachteil sowie noch weitere Nachteile des Standes der Technik zu beseitigen.

Diese Aufgabe wird bei der einleitenden genannten Halteeinrichtung erfindungsgemäss so gelöst, wie dies im kennzeichnenden Teil des Patentanspruchs 1 definiert ist.

Nachstehend werden Ausführunsgformen der vorliegenden Erfindung anhand der beiliegenden Zeichnungen näher erläutert. Es zeigt:
Fig. 1 in einem vertikalen Schnitt eine erste Ausführung der vorliegenden Einrichtung,
Fig. 2 in einem vertikalen Schnitt eine zweite Ausführung der vorliegenden Einrichtung,
Fig. 3 in einem vertikalen Schnitt eine dritte Ausführung der vorliegenden Einrichtung und
Fig. 4 in einem vertikalen Schnitt eine vierte Ausführung der vorliegenden Einrichtung.

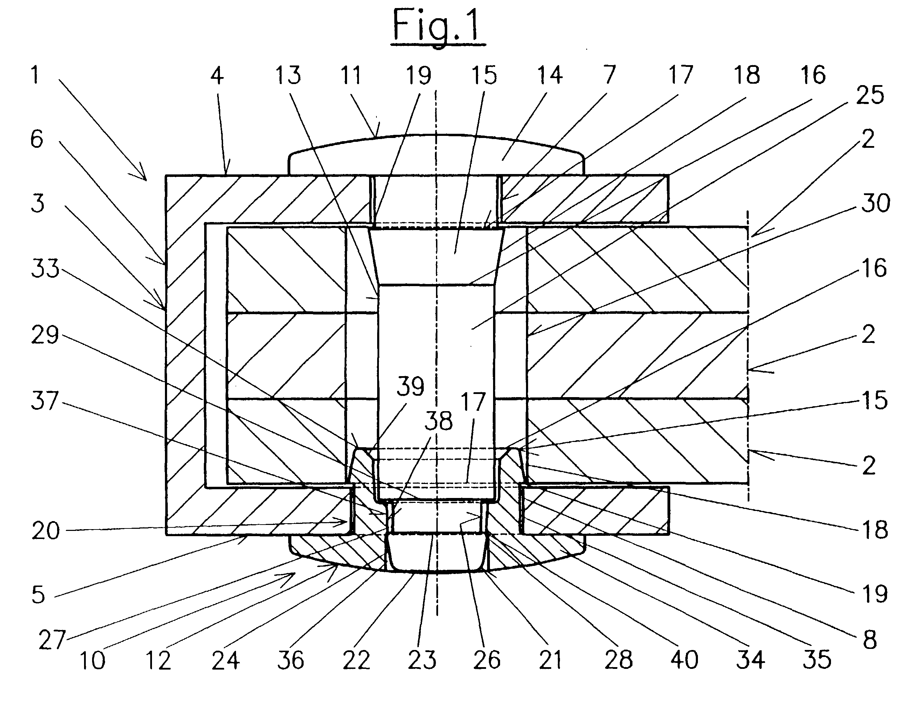

In Fig. 1 ist eine erste Ausführung der vorliegenden Einrichtung in einem vertikalen Schnitt dargestellt. Die Halteeinrichtung umfasst einen Rücken 1, welcher zur Erfassung eines Randes von flächenhaften Gegenständen 2, beispielsweise von Teppichmustern usw., bestimmt und ausgebildet ist. Der Grundkörper 3 dieses Rückens 1 hat einen U-förmigen Querschnitt, so dass der Rücken 1 zwei den Schenkeln der U-Form entsprechende Lappen 4 und 5 sowie einen diese Lappen 4 und 5 verbindenden Boden 6 aufweist. Der Rücken 1 kann durch Biegen eines flächenhaften Materials, beispielsweise eines Karton- oder eines Kunststoffzuschnittes entstehen. Die Lappen 4 und 5 und der Boden 6 bilden in diesem Fall,ein Stück. Das flächenhafte Material kann mit einer Kunststoffolie bespannt, mit Papier kaschiert usw. sein.

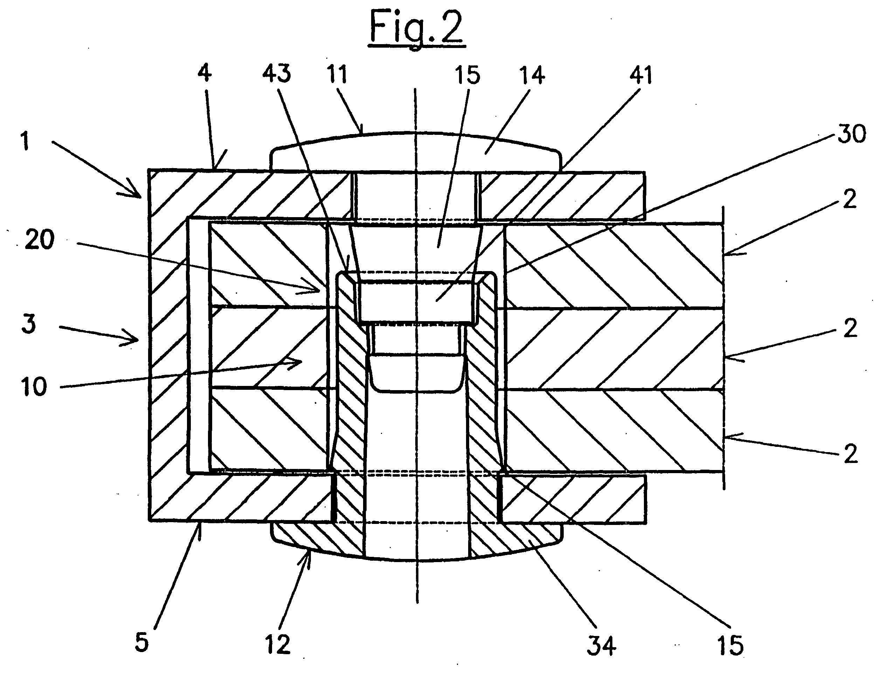

An einander gegenüberliegenden Stellen der Lappen 4 und 5 sind Oeffnungen 7 und 8 in diesen Lappen 4 und 5 ausgeführt. Der in Fig. 1 und 2 abgebildete Schnitt steht senkrecht zur Längsrichtung des Rückens 1 und er ist durch ein Paar der sich gegenseitig zugeordneten Oeffnungen 7 und 8 in den Lappen 4 und 5 des Rückens 1 geführt. Folglich ist in Fig. 1 und 2 nur eines der Paare der sich gegenseitig zugeordneten Oeffnungen 7 und 8 dargestellt.

Durch die einander gegenüberliegenden Oeffnungen 7 und 8 in den Lappen 4 und 5 geht eine Steckvorrichtung 10 hindurch. In der Tat weist ein Rücken 1 normalerweise mindestens zwei solche Steckvorrichtungen 10 auf, welche in einem Abstand voneinander und parallel zum Boden 6 des Rückens 1 angeordnet sind. Dementsprechend gibt es auch mehrere Paare der Oeffnungen 7 und 8 im Rücken 1. In den sich im Rücken 1 befindlichen Randpartien der Gegenstände 2 sind Oeffnungen 30 entsprechend den Oeffnungen 7 und 8 in den Lappen 4 und 5 ausgeführt, welche übereinander liegen und durch welche jeweils eine der Steckvorrichtungen 10 hindurchgeht. Die Steckvorrichtung 10 besteht aus zwei Komponenten 11 und 12, wobei die jeweilige Komponente 11 bzw. 12 einstückig ist.

Die erste Steckkomponente 11 der in Fig. 1 dargestellten Halteeinrichtung hat einen stab- bzw. bolzen- bzw. stiftförmigen Grundkörper 13, welcher durch die Oeffnung 7 im ersten Lappen 4 hindurchgeht. Die Abmessungen dieser Oeffnung 7 sind an die Abmessungen des Grundkörpers 13 angepasst. Da die abgebildete Steckvorrichtung 10 im wesentlichen kreisrund ist, ist der Durchmesser der Oeffnung 7 an den Durchmesser des Grundkörpers 13 derart angepasst, dass der Grundkörper 13 durch den Lappen 4, gegebenenfalls auch mit einem kleinen Spiel hindurchgehen kann. Der Grundkörper 13 ist so lang ausgeführt, dass er sich praktisch von einer der Oeffnungen 7 bis zur gegenüberliegenden Oeffnung 8, d.h. von einem Lappen 4 bis zum anderen Lappen 5 erstreckt. Für die Arbeitsweise der vorliegenden Einrichtung ist diese Länge des Grundkörpers 13 jedoch keine Bedingung. Denn wenn die andere bzw. zweite Steckkomponente 12 ausreichend lang ist, dann kann die Länge des stabförmigen Grundkörpers 13 auch kleiner sein als der Abstand zwischen den Lappen 4 und 5.

An die Stirnfläche der in der ersten Oeffnung 7 liegenden Endpartie des Grundkörpers 13 schliesst sich ein Anschlag 14 an, welcher die Form eines flachen und von der Achse A der Steckvorrichtung 10 radial abstehenden Kopfes hat. Dieser Anschlag 14 liegt an der Aussenseite des Lappens 4 und die dem Lappen 4 zugewandte Fläche des flachen Kopfes 14 ist plan. Der Grundkörper 13 dieser Steckkomponente 11 ist ferner mit Rückhaltemitteln 15 versehen. Diese Rückhaltemittel 15 befinden sich in einem Abstand vom Anschlag 14 dieser Steckkomponente 11, wobei dieser Abstand zumindest so gross ist wie die Dicke des Lappens 4.

Die Rückhaltemittel 15 haben die Form eines Konusses, welcher am stabförmigen Grundkörper 13 dieser Steckkomponente 11 angebracht oder angeformt ist. Dieser Konus 15 hat eine Grundfläche 16 mit einem kleineren Durchmesser und eine Grundfläche 17 mit einem grösseren Durchmesser, zwischen welchen sich ein Mantel 18 dieses Konusses 15 erstreckt. Die Abmessungen der kleineren Grundfläche 16 entsprechen den Abmessungen des Grundkörpers 13 dieser Steckkomponente 11. Da der Grundkörper 13 dieser Steckkomponente 11 im dargestellten Fall einen kreisrunden Querschnitt hat, ist die Kontur der Grundflächen 16 und 17 des Konusses 15 ebenfalls kreisförmig. Im dargestellten Fall gleicht der Durchmesser der kleineren Konusgrundfläche 16 dem Druchmesser des Grundkörpers 13 dieser Steckkomponente 11.

Der Konus 15 ist derart orientiert, dass die grössere Grundfläche 17 desselben zum Anschlag 14 an diesem Grundkörper 13 näher liegt als die Grundfläche 16 mit dem kleineren Durchmesser. Dabei befindet sich die grössere Grundfläche 17 in einem Abstand vom Anschlag 14 dieser Steckkomponente 11, der zumindest so gross ist wie die Dicke des Lappens 4. Jener Abschnitt des Grundkörpers 13, welcher sich zwischen dem Anschlag 14 und den Rückhaltemitteln 15 erstreckt, geht durch die Oeffnung 7 im ersten Lappen 4 hindurch. Die Abmessungen dieser Oeffnung 7 im Lappen 4 sind kleiner als die Abmessungen der grösseren Grundfläche 17 des Konusses 15.

Wegen einer Differenz zwischen dem Durchmesser der grösseren Grundfläche 17 des Konusses 15 und dem Durchmesser des Grundkörpers 13 liegt ein Teil der grösseren Grundfläche 17 des Konusses 15 frei. Es handelt sich um einen ringförmigen Randabschnitt der grösseren Grundfläche 17, welcher sich an den Mantel 18 des Konusses 15 anschliesst und welcher praktisch senkrecht zur Längsachse A der Steckvorrichtung 10 steht. Dieser Grundflächenabschnitt 19 bildet eine Schulter, welche auf der Innenseite des Lappens 4 zur Auflage kommt, wenn diese Steckkomponente 11 aus der Oeffnung 7 gegen aussen hin herausgezogen oder herausgedrückt werden sollte. Der Abstand zwischen der grösseren Konusgrundfläche 17 und dem Anschlag 14 entspricht der Dicke des Lappens 4.

Die gegenüberliegende bzw. innenliegende Endpartie des stabförmigen Grundkörpers 13 ist als der Kopf 21 eines Schnappverschlusses 20 ausgebildet. Dieser Kopf 21 ist ebenfalls konusförmig, sodass er eine Grundfläche 22 mit einem kleineren Durchmesser, eine Grundfläche 23 mit einem grösseren Durchmesser sowie einen Mantel 24 aufweist, wobei dieser Mantel 24 sich zwischen den Grundflächen 22 und 23 erstreckt. Die Grundfläche 23 mit dem grösseren Durchmesser ist dem Rumpf 25 des Grundkörpers 13 zugewandt und die Grundfläche 22 mit dem kleineren Durchmesser bildet die innere Stirnfläche dieser Steckkomponente 11.

Der Schnappkopf 21 ist über einen Hals 26 an den Rumpf 25 bzw. den übrigen Teil des Grundkörpers 13 angeschlossen. Dieser Hals 26 ist einstückig einerseits mit der grösseren Grundfläche 23 des Schnappkopfes 21 und andererseits mit dem Rumpf 25 des Grundkörpers 13. Der Hals 26 hat einen im wesentlichen viereckförmigen Querschnitt, sodass er eine im wesentlichen zylinderförmige Umfangswand 27 aufweist, deren Durchmesser kleiner ist als der Durchmesser sowohl der grösseren Grundfläche 23 des Schnappkopfes 21 als auch des Rumpfes 25 des Grundkörpers 13. Praktisch senkrecht zu dieser Umfangswand 27 stehen Seitenwände 28 und 29 dieses Halses 26, welche im wesentlichen senkrecht zur genannten Umfangswand 27 stehen.

Wegen der Differenz zwischen dem Durchmesser der grösseren Kopfgrundfläche 23 und dem Durchmesser des Halses 26 liegt der ringförmiger Abschnitt 28 der grösseren Grundfläche 23 bzw. die äussere Seitenwand 28 des Halses 26 frei. Diese Ringfläche 28 befindet sich im Bereich des Ueberganges zwischen dem Kopf 21 und dem Hals 26 und sie steht praktisch senkrecht zur Längsachse A dieser Steckvorrichtung 10.

Die zweite Steckkomponente 12 weist einen rohr- bzw. hülsenförmigen Grundkörper 33 auf, welcher durch die Oeffnung 8 im zweiten Lappen 5 hindurchgeht. Die Abmessungen dieser Oeffnung 8 sind an die äusseren Abmessungen des Grundkörpers 33 angepasst. Da die abgebildete Steckvorrichtung 10 im wesentlichen kreisrund ist, ist der Durchmesser der Oeffnung 8 an den Durchmesser des Grundkörpers 33 derart angepasst, dass der Grundkörper 33 durch den Lappen 5, gegebenenfalls auch mit einem kleinen Spiel hindurchgehen kann.

An die Stirnfläche der in der zweiten Oeffnung 8 liegenden Endpartie des Grundkörpers 33 schliesst sich ein Anschlag 34 an, welcher die Form eines flachen und von der Achse A der Steckvorrichtung 10 radial abstehenden Kopfes hat. Dieser Anschlag 34 liegt an der Aussenseite des Lappens 5 und die dem Lappen 5 zugewandte Fläche des flachen Kopfes 34 ist plan. Der Grundkörper 33 dieser Steckkomponente 12 ist mit den bereits beschriebenen Rückhaltemitteln 15 ebenfalls versehen, welche als ein Konus ausgeführt sind.

Der Konus 15 ist derart orientiert, dass die grössere Grundfläche 17 desselben zum Anschlag 34 an diesem Grundkörper 33 näher liegt als die Grundfläche 16 mit dem kleineren Durchmesser. Dabei befindet sich die grössere Grundfläche 17 in einem Abstand vom Anschlag 34 dieser Steckkomponente 12, der zumindest so gross ist wie die Dicke des Lappens 5. Jener Abschnitt des Grundkörpers 33, welcher sich zwischen dem Anschlag 34 und den Rückhaltemitteln 15 erstreckt, geht durch die Oeffnung 8 im zweiten Lappen 5 hindurch. Die Abmessungen dieser Oeffnung 8 im Lappen 5 sind kleiner als die Abmessungen der grösseren Grundfläche 17 des Konusses 15.

Die Schulter 19, welche sich zwischen der zylinderförmigen Aussenwand 35 des hülsenförmigen Grundkörpers 33 dieser zweiten Steckkomponente 12 und dem Konusmantel 18 erstreckt, kommt auf der Innenseite des Lappens 5 zur Auflage, wenn diese Steckkomponente 12 aus der Oeffnung 8 gegen aussen hin herausgezogen oder herausgedrückt werden sollte. Der Abstand zwischen der grösseren Konusgrundfläche 17 und dem Anschlag 34 entspricht der Dicke des Lappens 5.

Die gegenüberliegende bzw. innenliegende Endpartie des hülsenförmigen Grundkörpers 33 ist für die Aufnahme und Halterung des Kopfes 21 der ersten Steckkomponente 11 ausgebildet. Zu diesem Zweck ist die Innenwand 36 der Hülse 33 mit einer umlaufenden Rippe 37 versehen, welche aus der Innenfläche 36 in der Radialrichtung hervortritt und welche einen im wesentlichen viereckförmigen Querschnitt hat. Der Durchmesser der zylinderförmigen Stirnfläche 38 dieser Rippe 37 ist kleiner als der Durchmesser der grösseren Grundfläche 23 am konusförmigen Schnappkopf 21. Zur Erleichterung der Einschiebung des Kopfes 21 in die zweite Steckkomponente 12 ist die innere Mündung des hülsenförmigen Grundkörpers 33 mit einer umlaufenden Anschrägung 39 versehen.

Nachdem der Kopf 21 in das Innere der zweiten Steckkomponente 12 eingeführt worden ist, gelangt die umlaufende Rippe 37 an der zweiten Steckkomponente 12 in den Hals 26 an der ersten Steckkomponente 11. Jetzt hintergreift die Schulter 28 am Kopf 21 die aussen liegende Kante 40 der Rippe 37, wodurch der Kopf 21 in dieser zweiten Steckkomponente 12 fixiert ist.

Fig. 2 zeigt in einem vertikalen Schnitt eine weitere Ausführungsmöglichkeit der vorliegenden Halteeinrichtung. Diese zweite Ausführungsform unterscheidet sich von der ersten Ausführung der vorliegenden Einrichtung in erster Linie darin, dass der hülsenförmige bzw. hohle Grundkörper 43 der zweiten Steckkomponente 12 verhältnismässig lang ist, während der stab-, bzw. bolzen- bzw. stiftförmige Grundkörper 41 der ersten Steckkomponente 11 verhältnismässig kurz ist. Im dargestellten Fall ist der hülsenförmige Grundkörper 43 länger als der bolzenförmige Grundkörper 41 der ersten Steckkomponente 11. Der hülsenförmige Grundkörper 43 ist zweckmässigerweise so lang ausgeführt, dass er sich praktisch von einem der Lappen 5 bis zum gegenüberliegenden Lappen 4 erstreckt. Der stabförmige Grundkörper 41 ist dagegen so kurz wie möglich gehalten. Sonst sind die Anschläge 14 und 34 sowie der Schnappverschluss 20 gleich ausgebildet wie bei der in Fig. 1 dargestellten Ausführungsform. Als Vorteil dieser Ausführungsform gilt, dass der Spalt zwischen der Wand der Oeffnungen 30 in den Gegenständen 2 und der äusseren Wand des hülsenförmigen Grundkörpers 43 kleiner ist als bei der Ausführungsform gemäss Fig. 1, sodass die Gegenstände bei dieser zweiten Ausführungsform dieser Einrichtung durch die Steckvorrichtung 10 an Ort und Stelle weniger locker gehalten werden.

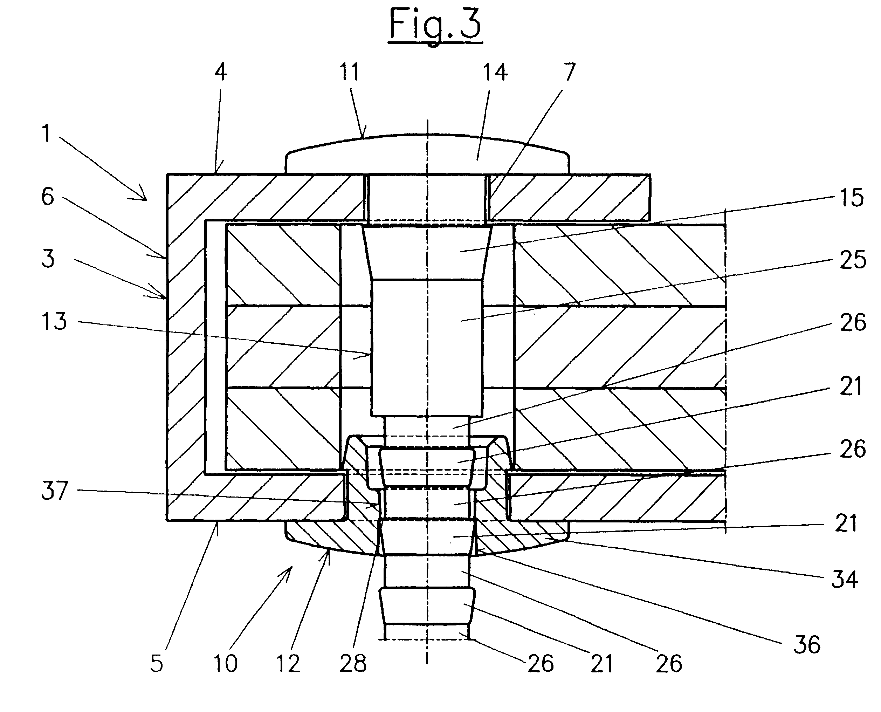

Die in Fig. 1 und 2 beschriebenen Ausführungen der vorliegenden Einrichtung setzen voraus, dass für jede Dicke des Rückens 1 Steckkomponenten 11 und 12 mit entsprechender Länge vorhanden sind. Da die Rücken 1 unterschiedlich dick sein können, setzt dies voraus, dass ein beträchtliches Sortiment an unterschiedlich langen Steckkomponenten 11 und 12 vorhanden ist. Um diesen Nachteil beseitigen zu können, ist eine weitere Ausführungsform der vorliegenden Einrichtung vorgesehen, welche in Fig. 3 dargestellt ist.

An den Rumpf 25 des bolzenförmigen Grundkörpers 13 der ersten Steckkomponente 11 dieser Halteeinrichtung, welcher im Zusammenhang mit Fig. 1 vorstehend beschrieben ist, schliesst eine Gruppe von Köpfen 21 an. In dieser Gruppe sind die Köpfe 21 in Serie bzw. nacheinander angeordnet und deren mittlere Achsen liegen auf der Mittelachse A des Grundkörpers 13. Die Köpfe 21 bilden Verdickungen am Grundkörper 13, welche sich in Abständen voneinander befinden. Zwischen den benachbarten Köpfen 21 liegt jeweils ein Hals 26, wobei die Ausbildung dieses Halses 26 vorstehend ebenfalls beschrieben ist. Der zum Rumpf 25 am nächsten liegende Kopf 21 ist ebenfalls über einen Hals 26 an den Rumpf 25 angeschlossen. Die zweite bzw. hülsenförmige Steckkomponente 12 dieser Halteeinrichtung weist die bereits beschriebene und achsial verlaufende Oeffnung 36 auf.

Beim Anbringen einer solchen Steckvorrichtung 10 an einen Rücken 1 kann zunächst die Hülsenkomponente 12 dieser Steckverbindung 10 durch die Oeffnung 8 im Lappen 5 so weit hindurchgeführt werden, bis der Anschlag 34 an dieser Komponente 12 auf dem Lappen 5 zur Auflage kommt. Dann wir die Stabkomponente 11 dieser Vorrichtung 10 in die Oeffnung 7 im anderen Lappen 4 eingeführt. Dabei wird der Grundkörper 13 der Stabkomponente 11 durch die Hülsenkomponente 12 so weit vorgeschoben, bis der Anschlag 14 an der Stabkomponente 11 auf dem Rückenlappen 4 satt aufliegt. Jetzt liegt die umlaufende Rippe 37 an der Hülsenkomponente 12 im Bereich eines der Hälse 26 an der Stabkomponente 11 und sie hintergreift die Schulter 28 an jenem Kopf 21, welcher sich im Bereich der Mündung der Oeffnung 36 in der Hülsenkomponente 12 befindet. Von der Aussenseite des Anschlages 34 an dieser Hülsenkomponente 12 stehen jene Köpfe 21 am Stabkörper 13 ab, welche für die Halterung des Gegenstandes 2 im Rücken 1 überflüssig bzw. nicht erforderlich sind. Dieser von der Hülsenkomponente 12 abstehende Abschnitt des Stabkörpers 13 kann im Bereich der Mündung der Oeffnung 36 in der Hülsenkomponente 12 einfach abgeschnitten werden.

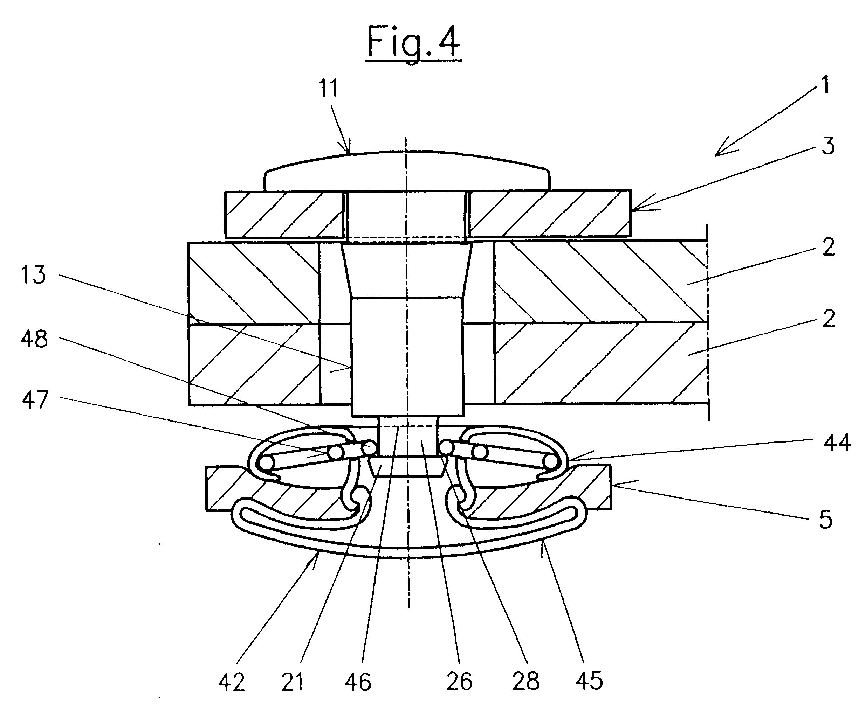

In Fig. 4 ist eine weitere Ausführungsform der vorliegenden Halteeinrichtung dargestellt. Die stabförmige Steckkomponente 11 ist bei dieser Ausführungsform im wesentlichen so ausgeführt, wie dies im Zusammenhang mit Fig. 1 vorstehend beschrieben ist. Die andere, d.h. hülsenförmige bzw. hohle Steckkomponente 42 ist als der hohle Bestandteil eines an sich bekannten Druckknopfes ausgeführt.

Dieser Hohlteil 42 umfast zwei Hälften 44 und 45, wobei je eine dieser Hälften 44 bzw. 45 sich zu einer der Seiten des Lappens 5 des Rückens 1 befindet. Die an der Innenseite des Rückens 1 liegende Hohlteilhälfte 44 weist eine mittige Oeffnung 46 auf. Im Inneren dieser Hohlteilhälfte 44 befindet sich eine Spiralfeder 47. Die in der Mitte dieser Feder 47 liegende Windung 48 hat einen so gewählten Durchmesser, dass der Kopf 21 an der stabförmigen Steckkomponente 11 durch diese Windung 48 hindurchgesteckt werden kann und dass diese Windung 48 dann im Bereich des Halses 26 die Schulter 28 am Kopf 21 hintergreift. Die an der Aussenseite des Lappens 5 liegende Hälfte 45 des Hohlteiles 42 ist im wesentlichen wie ein Deckel ausgebildet und sonst ist sie zur Durchführung eines Formschlusses mit der ersten Hohlteilhälfte 44 ausgeführt. Der Kopf 21 der ersten Steckkomponente 11 bildet zusammen mit der Federhälfte 44 des Hohlteils 42 einen Schnappverschluss 20.

Unter Umständen kann der Rücken 1 aus bloss zwei Materialstreifen bestehen, von welchen je einer einer der Aussenflächen der Gegenstände 2 zugeordnet ist. Solche Materialstreifen entsprechen in diesem Fall den vorstehend genannten Lappen 4 und 5. Diese Ausführungsform der vorliegenden Einrichtung ist in Fig. 4 mitdargestellt.

Die Steckvorrichtung 10 kann auch eine andere Form ihres Querschnittes haben als kreisrund. Dieser Querschnitt kann beispielsweise auch sechseckig sein.

## Patentansprüche

1. Halteeinrichtung für zumindest einen flächenhaften Gegenstand (2), mit einem Rücken (1), welcher einer der Randpartien des Gegenstandes zugeordnet ist, und mit zumindest einer Steckvorrichtung, welche die Randpartie des Gegenstandes mit dem Rücken zusammenhält, wobei die Steckvorrichtung (10) aus zwei Komponenten (11,12) besteht, wobei eine dieser Komponenten (11;12) einen länglichen Grundkörper (13;33) aufweist und wobei eine der Endpartien dieses länglichen Grundkörpers (13;33) mit einem radial abstehenden Anschlag (14;34) versehen ist, **dadurch gekennzeichnet, dass** der längliche Grundkörper (13;33) mit Mitteln (15) versehen ist, welche diese Komponente (11; 12) im Rücken (1) halten können, dass diese Mittel (15) mit dem länglichen Grundkörper (13;33) der Komponente (11;12) einstückig sind und dass die Haltemittel (15) sich in einem Abstand von der Innenseite des Anschlages befinden.

2. Halteeinrichtung nach Patentanspruch 1, **dadurch gekennzeichnet, dass** der Abstand zwischen der Innenseite des Anschlags (14;34) und den Haltemitteln (15) der Dicke des Materials des Rückens (1) entspricht.

3. Halteeinrichtung nach Patentanspruch 1, **dadurch gekennzeichnet, dass** die Haltemittel (15) die Form eines Konusses haben, welcher mit dem Komponentengrundkörper (13;33) konzentrisch liegt, diesen umgibt und von diesem absteht, dass die Abmessungen der kleineren Grundfläche (16) des Konusses (15) den Abmessungen des Komponentengrundkörpers (13;33) entsprechen bzw. gleichen, dass der Konus (15) derart orientiert ist, dass die grössere Grundfläche (17) desselben zum Anschlag (14;34) an diesem Grundkörper (13;33) näher liegt als die kleinere Konusgrundfläche (16) und dass der Abstand zwischen der grösseren Konusgrundfläche (17) und dem Anschlag (14,34) der Dicke des Materials des Rückens (1) entspricht.

4. Halteeinrichtung nach Patentanspruch 1, **dadurch gekennzeichnet, dass** die einander zugeordneten Partien der Steckkomponenten (11,12) zur Bildung eines Schnappverschlusses (20) ausgeführt sind.

5. Halteeinrichtung nach Patentanspruch 4, **dadurch gekennzeichnet, dass** eine der Steckkomponenten (11) einen stabförmigen bzw. bolzenähnlichen Grundkörper (13) und die andere Steckkomponente (12) einen hülsenförmigen Grundkörper (33) aufweist, dass die einander zugeordneten Endpartien solcher Grundkörper (13;33) zur Bildung des Schnappverschlusses (20) ausgeführt sind.

6. Halteeinrichtung nach Patentanspruch 5, **dadurch gekennzeichnet, dass** der Schnappverschluss (20) zumindest einen Kopf (21) umfasst, welcher an der innenliegenden Endpartie des stabförmigen Grundkörpers (13) ausgebildet ist, dass ein Hals (26) sich zwischen diesem Kopf (21) und dem übrigen Teil (25) des stabförmigen Grundkörpers (13) befindet, dass der Schnappverschluss (20) ferner eine umlaufende Rippe (37) umfasst, welche an der Innenwand (36) der innenliegenden Endpartie der Hülsenkomponente (12) ausgebildet ist, wobei diese Rippe (37) von der Innenwand (36) der Hülsenkomponente (12) absteht, und dass die Rippe (37) so angeordnet und geformt ist, dass sie im Hals (26) einrasten kann.

7. Halteeinrichtung nach Patentanspruch 5, **dadurch gekennzeichnet, dass** der Grundkörper (43) der hülsenförmigen bzw. hohlen Komponente (12) der Schnappvorrichtung (10) länger ist als der Grundkörper (13) der Stabkomponente (11) dieser Vorrichtung (10).

8. Halteeinrichtung nach Patentanspruch 5, **dadurch gekennzeichnet, dass** der bolzenförmige Grundkörper (13) der ersten Steckkomponente (11) mehrere Köpfe (21) aufweist, dass diese Köpfe (21) in Abständen voneinander und aufeinander folgend angeordnet sind, dass ein Hals (26) sich zwischen den jeweils benachbarten Köpfen (21) befindet und dass die zweite bzw. hülsenförmige Steckkomponente (12) eine achsial verlaufende Öffnung (36) aufweist, durch welche die Köpfe (21) der stabförmigen Steckkomponente (11) hindurchgehen können.

9. Halteeinrichtung nach Patentanspruch 4, **dadurch gekennzeichnet, dass** eine der Steckkomponenten (11) einen stabförmigen bzw. bolzenähnlichen Grundkörper (13) aufweist, dass die andere Steckkomponente (42) als der hohle Teil eines Druckknopfes ausgeführt ist und dass die freie Endpartie des stabförmigen Grundkörpers (13) der ersten Steckkomponente (11) mit einem Kopf (21) versehen ist, welcher zusammen mit dem Hohlteil (42) des Druckknopfes einen Schnappverschluss (20) bildet.

10. Halteeinrichtung nach Patentanspruch 1, **dadurch gekennzeichnet, dass** der Rücken (1) zumindest zwei Materialstreifen bzw. Materiallappen (4,5) aufweist, von welchen je einer einer der Aussenflächen des Gegenstandes (2) zugeordnet ist.

## Claims

1. Holder for at least one flat object (2), having a back (1) engaging with the edge of said flat object and having at least one plug-in unit (10) which holds the edge of the object with said back together, whereby said plug-in unit consists of two components (11,12), one of these components having a long main body (13;33), and whereby one of the end portions of this long main body (13;33) has a radially projecting stop (14; 34), **characterized in that** the long main body (13;33) is provided with means (15), which can hold this component (11;12) in said back (1), that these means (15) are in one piece with the long main body (13;33) of the component (11;12) and that the holding means (15) are located at a distance to the interior side of the stop.

2. Holder as defined in claim 1, **characterized in that** the distance between the interior side of said stop (14;34) and the holding means (15) corresponds to the thickness of that material of which the back (1) is made.

3. Holder as defined in claim 1, **characterized in that** the holding means (15) have the shape of a cone which is concentric with the main body (13;33) of said component, which surrounds the main body and which projects away from the main body, that the dimension size of the smaller base (16) of said cone (15) corresponds or is equal to the dimensional size of the main body (13;33) of said component, that the cone is oriented in such a way that the larger base (17) thereof is nearer to the stop (14;34) than the smaller base (16) of the cone, and that the distance between the larger base (17) of the cone and the stop (14;34) corresponds to the thickness of the material of the back (1).

4. Holder as defined in claim 1, **characterized in that** those portions of the plug-in components (11,12) are carried out in such a way that they form a self-locking breech.

5. Holder as defined in claim 4, **characterized in that** one of the plug-in components (11) has a rod like or a bolt like main body (13), that the other plug-in component (12) has a jacket like main body (33), that those end portions of such main bodies (13;33) which face each other are shaped in such a way that they form the self-locking breech (20).

6. Holder as defined in claim 5, **characterized in that** the self-locking breech (20) comprises at least one head (21) which is formed on the interior end portion of the rod like main body (13), that a neck (26) is placed between the head (21) and the remaining part (25) of the rod shaped main body (13), that the self-locking breech (20) further comprises a circular rib (37), which is formed on the interior wall (36) of the interior lying end portion (37) of the jacket like component (12), whereby this rib (37) projects from the interior wall (36) of the jacket shaped component (12), and that said rib (36) is arranged and shaped in such a way that it can engage the neck (26).

7. Holder as defined in claim 5, **characterized in that** the main body (43) of the jacket shaped or hollow component (12) of the plug-in device (10) is longer than the main body (13) of the rod shaped component (11) of this device (10).

8. Holder as defined in claim 5, **characterized in that** the bolt-shaped main body (13) of the plug-in component (11) has a number of heads (21), that these heads (21) are arranged in distances from each other and they follow one after another, that one neck (26) is placed between the respective neighboring heads (21) and that the second or jacket shaped plug-in component (12) has an axial running opening (36) through which the heads (21) of the rod shaped component (11) can go through.

9. Holder as defined in claim 4, **characterized in that** one of the plug-in components (11) has a rod like or bolt like main body (13), that the other plug-in component (42) is carried out as the hollow part of a press fastener and that the free end portion of the rod like main body (13) of said first component (11) has a head (21) which form together with the hollow part (42) of the press fastener a plug-in breech.

10. Holder as defined in claim 1, **characterized in that** the back (1) comprises at least two strips or lugs (4,5) of a material and that the respective one of these strips or lugs (4,5) is associated with one of the outer surfaces of the object (2).

## Revendications

1. Dispositif de fixation pour au moins un élément plan (2), comprenant une partie dorsale (1) qui est associée à l'une des parties de bord de l'élément et comprenant au moins un dispositif d'enfichage qui retient ensemble la partie de bord de l'élément à la partie dorsale, le dispositif d'enfichage (10) se composant de deux composants (11, 12), l'un de ces composants (11; 12) présentant un corps de base longitudinal (13; 33) et l'une des parties d'extrémité de ce corps de base longitudinal (13; 33) étant pourvue d'une butée saillant radialement (14; 34), **caractérisé en ce que** le corps de base longitudinal (13; 33) est pourvu de moyens (15) qui peuvent retenir ces composants (11; 12) dans la partie dorsale (1), **en ce que** ces moyens (15) sont réalisés d'une pièce avec le corps de base longitudinal (13; 33) des composants (11; 12) et **en ce que** les moyens de retenue (15) se trouvent à distance du côté interne de la butée.

2. Dispositif de fixation selon la revendication 1, **caractérisé en ce que** la distance entre le côté interne de la butée (14; 34) et les moyens de retenue (15) correspond à l'épaisseur du matériau de la partie dorsale (1).

3. Dispositif de fixation selon la revendication 1, **caractérisé en ce que** les moyens de retenue (15) ont la forme d'un cône qui est concentrique au corps de base (13; 33) des composants, entoure celui-ci et s'éloigne de celui-ci, **en ce que** les dimensions de la surface de base plus petite (16) du cône (15) correspondent ou sont identiques aux dimensions du corps de base (13; 33) des composants, **en ce que** le cône (15) est orienté de telle sorte que la plus grande surface de base (17) de celui-ci soit plus proche de la butée (14; 34) de ce corps de base (13; 33) que la plus petite surface de base du cône (16) et **en ce que** la distance entre la plus grande surface du cône (17) et la butée (14, 34) correspond à l'épaisseur du matériau de la partie dorsale (1).

4. Dispositif de fixation selon la revendication 1, **caractérisé en ce que** les parties des composants d'enfichage (11, 12) sont réalisées pour former une fermeture par encliquetage (20).

5. Dispositif de fixation selon la revendication 4, **caractérisé en ce que** l'un des composants d'enfichage (11) présente un corps de base (13) en forme de barre ou de type boulon, et l'autre composant d'enfichage (12) présente un corps de base (33) en forme de gaine, et **en ce que** les parties d'extrémités associées l'une à l'autre de ces corps de base (13; 33) sont réalisées pour former la fermeture par encliquetage (20).

6. Dispositif de fixation selon la revendication 5, **caractérisé en ce que** la fermeture par encliquetage (20) comprend au moins une tête (21) qui est réalisée sur la partie d'extrémité, tournée vers l'intérieur, du corps de base en forme de barre (13), **en ce qu'**une gorge (26) se trouve entre cette tête (21) et la partie restante (25) du corps de base en forme de barre (13), **en ce que** la fermeture par encliquetage (20) comprend en outre une nervure périphérique (37), qui est réalisée sur la paroi interne (36) de la partie d'extrémité, tournée vers l'intérieur, du composant formant gaine (12), cette nervure (37) partant de la paroi interne (36) du composant formant gaine (12) et **en ce que** la nervure (37) est disposée et formée de telle sorte qu'elle puisse s'engager dans la gorge (26).

7. Dispositif de fixation selon la revendication 5, **caractérisé en ce que** le corps de base (43) du composant en forme de gaine ou creux (12) du dispositif d'encliquetage (10) est plus long que le corps de base (13) du composant formant barre (11) de ce dispositif (10).

8. Dispositif de fixation selon la revendication 5, **caractérise en ce que** le corps de base formant boulon (13) du premier composant d'enfichage (11) présente plusieurs têtes (21), **en ce que** ces têtes (21) sont disposées à distance les unes des autres et les unes derrière les autres, **en ce qu'**une gorge (26) se trouve entre les têtes respectivement adjacentes (21) et **en ce que** le deuxième composant d'enfichage en forme de gaine (12) présente une ouverture (36) s'étendant axialement, à travers laquelle les têtes (21) du composant d'enfichage en forme de barre (11) peuvent passer.

9. Dispositif de fixation selon la revendication 4, **caractérisé en ce que** l'un des composants d'enfichage (11) présente un corps de base (13) en forme de barre ou de type boulon, **en ce que** l'autre composant d'enfichage (42) est réalisé sous forme de partie creuse d'un bouton poussoir et **en ce que** la partie d'extrémité libre du corps de base (13) en forme de barre du premier composant d'enfichage (11) est pourvue d'une tête (21) qui forme, conjointement avec la partie creuse (42) du bouton poussoir, une fermeture par encliquetage (20).

10. Dispositif de fixation selon la revendication 1, **caractérisé en ce que** la partie dorsale (1) présente au moins deux bandes de matériau ou languettes de matériau (4, 5) dont chacune est associée à l'une des faces extérieure de l'élément (2).
